# EUROPÄISCHE PATENTSCHRIFT

(11) **EP 1 800 954 B1**
(45) Veröffentlichungstag und Bekanntmachung des Hinweises auf die Patenterteilung: **06.01.2010**
(21) Anmeldenummer: 06023496.0
(22) Anmeldetag: 11.11.2006
(51) Int. Cl.: B60R 11/02

(54) **Vorrichtung zur beweglichen Haltung einer Ein-/Ausgabeeinheit**
Device for movably supporting an input and output information unit .
Dispositif de support mobile pour unité d'entrée et de sortie d'information

(30) Priorität: 24.12.2005 DE 102005062316
(43) Veröffentlichungstag der Anmeldung: 27.06.2007
(73) Patentinhaber: fischer automotive systems GmbH & Co. KG, 72160 Horb (DE)
(72) Erfinder: Leopold, Gunter, 72270 Baiersbronn (DE); Stern, Armin, 78727 Oberndorf (DE)
(74) Vertreter: Suchy, Ulrich Johannes

(56) Entgegenhaltungen:
- EP-A- 1 308 348
- DE-A1- 10 008 887
- DE-A1- 10 120 314

## Beschreibung

Die Erfindung betrifft eine Vorrichtung zur beweglichen Halterung einer Ein-/ Ausgabeeinheit mit den Merkmalen des Oberbegriffs des Anspruchs 1.

Die Erfindung ist insbesondere zum Einbau und zur Verwendung in Kraftwagen vorgesehen, sie ist grundsätzlich auch in anderen Land-, Luft- oder Wasserfahrzeugen einsetzbar. Mit Ein-/Ausgabeeinheit ist insbesondere an einen Flachbildschirm bzw. an ein Display gedacht. Die Ein-/Ausgabeeinheit kann auch Tasten oder sonstige Eingabeelemente aufweisen.

Die Ein-/Ausgabeeinheit der erfindungsgemäßen Vorrichtung ist um eine insbesondere horizontale Achse schwenkbar aus einer liegenden Nichtgebrauchsstellung in eine stehende Gebrauchsstellung und umgekehrt, wobei sich die Begriffe "liegend" und "stehend" auf eine vorgesehene Einbaulage der Vorrichtung beziehen. In der stehenden Gebrauchsstellung ist die Ein-/Ausgabeeinheit von Insassen des Fahrzeugs, in das die Vorrichtung eingebaut ist, sicht- und ablesbar bzw. bedienbar. In der Nichtgebrauchsstellung ist die Ein-/Ausgabeeinheit beispielsweise in einer Art Gehäuse in einem Armaturenbrett versenkt. Das Schwenken der Ein-/Ausgabeeinheit erfolgt mittels eines vorzugsweise elektromotorischen Antriebs.

Des Weiteren weist die erfindungsgemäße Vorrichtung einen Deckel auf, der die Ein-/ Ausgabeeinheit in der Nichtgebrauchsstellung abdeckt. Der Deckel befindet sich in diesem Fall in einer geschlossenen Stellung. Er verschließt beispielsweise eine Öffnung in einem Armaturenbrett, durch die die Ein-/Ausgabeeinheit in die stehende Gebrauchsstellung nach oben schwenkt. In geöffneter Stellung befindet sich der Deckel vorzugsweise hinter der in der Gebrauchsstellung stehenden Ein-/Ausgabeeinheit, wobei sich die Angabe "hinter" auf eine Blickrichtung der Insassen bezieht.

Zum Führen und Bewegen des Deckels weist die erfindungsgemäße Vorrichtung ein zwangsläufiges, ebenes, mehrgliedriges Getriebe auf, das eine kinematische Kette bildet.

Eine gattungsbildende Vorrichtung zur beweglichen Halterung eines LCD-Flachbildschirms in einem Armaturenbrett eines Kraftwagens offenbart die DE 100 08 887 A1. Die bekannte Vorrichtung weist einen um eine horizontale Achse schwenkbaren Bildschirm auf, der aus einer schräg nach unten gerichteten, in einer Öffnung des Armaturenbretts versenkten Nichtgebrauchsstellung, in eine senkrecht oder schräg stehende Gebrauchsstellung schwenkbar ist. In der Gebrauchsstellung steht der Bildschirm der bekannten Vorrichtung aus der Öffnung des Armaturenbretts nach oben vor und ist für die Fahrzeuginsassen sichtbar. Ein Deckel der bekannten Vorrichtung verschließt die Öffnung des Armaturenbretts und deckt den Bildschirm ab, wenn der Bildschirm nach unten in die Nichtgebrauchsstellung geschwenkt und im Armaturenbrett versenkt ist. Beim Schwenken des Bildschirms in die Gebrauchsstellung schwenkt der Deckel um eine ebenfalls horizontale Schwenkachse in die Öffnung im Armaturenbrett hinein und hinter den Bildschirm zurück. Der Bildschirm und der Deckel der bekannten Vorrichtung verschwenken zwangsläufig gemeinsam miteinander, sie sind mittels einer Kulissensteuerung gekoppelt. Die bekannte Vorrichtung benötigt einen großen Einbauraum für die Schwenkbewegungen des Bildschirms und des Deckels.

Der Erfindung liegt die Aufgabe zugrunde, eine Vorrichtung der vorstehend erläuterten Art vorzuschlagen, die eine kleinbauende Konstruktion ermöglicht.

Diese Aufgabe wird erfindungsgemäß durch die Merkmale des Anspruchs 1 gelöst. Die erfindungsgemäße Vorrichtung weist ein Koppelglied auf, das die Bewegung der Ein-/ Ausgabeeinheit und die Bewegung des Deckels synchronisiert. Das Koppelglied wird vom Antrieb der Ein-/Ausgabeeinheit angetrieben und treibt seinerseits das Getriebe des Deckels an. Unter Synchronisation ist eine Abstimmung der Bewegungen des Deckels und der Ein-/Ausgabeeinheit zu verstehen, die verhindert, dass der Deckel beim Öffnen und die Ein-/Ausgabeeinheit beim Aufstellen in die Gebrauchsstellung und bei den umgekehrten Bewegungen des Deckels und der Ein-/Ausgabeeinheit kollidieren. Nicht zwingend bedeutet Synchronisation eine gleichzeitige Bewegung des Deckels und der Ein-/Ausgabeeinheit oder eine Bewegung mit stets gleichem Geschwindigkeitsverhältnis. Es können in Phasen der Bewegungen der Deckel oder die Ein-/Ausgabeeinheit langsamer oder schneller sein als in anderen Phasen der Bewegung, es können auch der Deckel und/oder die Ein-/Ausgabeeinheit während Phasen der Bewegungen still stehen.

Das Koppelglied ermöglicht den Antrieb der Ein-/Ausgabeeinheit und des Deckels mit einem gemeinsamen Antrieb. Weiterer Vorteil des Koppelglieds ist die Synchronisation der Bewegungen der Ein-/Ausgabeeinheit und des Deckels und die Verhinderung einer Kollision der beiden Teile.

Das Koppelglied kann beispielsweise eine Kurvenscheibe oder dgl. sein. Bei einer Ausgestaltung der Erfindung ist das Koppelglied schwenkbar gelagert. Es ist beispielsweise ortsfest an einer Seitenwand eines Gehäuses der Vorrichtung schwenkbar gelagert. Eine Ausgestaltung der Erfindung sieht vor, dass das Koppelglied eine Kurve aufweist, die beim Schwenken der Ein-/Ausgabeeinheit vom Antrieb abgefahren wird, wodurch der Antrieb das Koppelglied bewegt, das seinerseits das Getriebe des Deckels antreibt. Die Kurve kann beispielsweise eine Kulissenbahn und das Koppelglied eine Kurven- oder Kulissenscheibe sein. Durch die Formgebung der Kurve lassen sich die Ein-/Ausgabeeinheit und der Deckel in gewünschter Weise synchronisieren und das Verhältnis der Geschwindigkeiten der Bewegungen der Ein-/ Ausgabeeinheit und des Deckels während des Schwenkens der Ein-/Ausgabeeinheit in gewünschter Weise ändern.

Eine Ausgestaltung der Erfindung sieht miteinander kämmende Verzahnungen des Koppelglieds und des Getriebes des Deckels zum Antrieb des Getriebes und damit des Deckels durch das Koppelglied vor. Die Verzahnungen können kreisförmig nach Art von Zahnrädern oder auch nach Art eines mit einer Zahnstange kämmenden Zahnrads ausgeführt sein. Zumindest eine der beiden miteinander kämmenden Verzahnungen kann gerade oder mit einer von einer Kreisform abweichenden Krümmung bzw. einem kurvenförmigen Verlauf ausgeführt sein. Die Verzahnungen haben den Vorteil, dass sie den Synchronlauf des Koppelglieds und des Deckels sicherstellen, die Stellung des Koppelglieds bestimmt die Stellung des Deckels eindeutig.

Eine Ausgestaltung der Erfindung sieht eine Antriebsbahn vor, an der sich der Antrieb der Vorrichtung beim Schwenken der Ein-/Ausgabeeinheit entlang bewegt. Die Antriebsbahn kann eine Gehäuse- bzw. ortsfeste Verzahnung nach Art einer Zahnstange sein, mit der ein elektromotorisch antreibbares Zahnrad des Antriebs kämmt. Die Zahnstange muss nicht gerade sein, sie kann gekrümmt oder bogenförmig verlaufen.

Eine Ausgestaltung der Erfindung sieht ein Viergelenk als Getriebe und Führung des Deckels der Vorrichtung vor. Ist das Viergelenk als Parallelogramm ausgeführt, wird der Deckel beim Öffnen und Schließen parallel verschoben auf einer kreisbogenförmigen Bahn. Durch Abweichen von einem Viergelenk kann der Deckel zusätzlich zu seiner translatorischen Bewegung auf einer Kreisbogenbahn geschwenkt werden. Mit einem Viergelenk ist in einfacher Weise eine preisgünstige, stabile und zuverlässige Führung des Deckels möglich. Durch die Geometrie des Viergelenks lässt sich eine gewünschte Bewegung des Deckels erzielen.

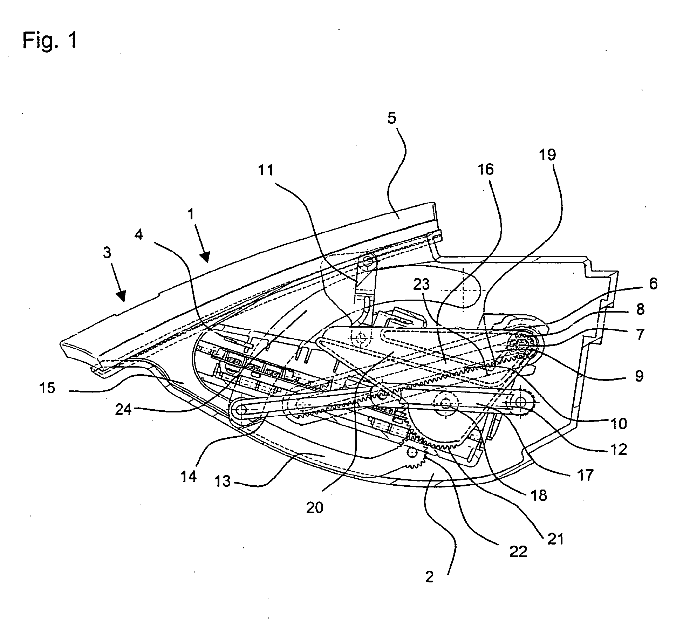

Die Erfindung wird nachfolgend anhand eines in der Zeichnung dargestellten Ausführungsbeispiels näher erläutert. Die Figuren 1 bis 3 zeigen eine erfindungsgemäße Vorrichtung in unterschiedlichen Stellungen in Seitenansicht.

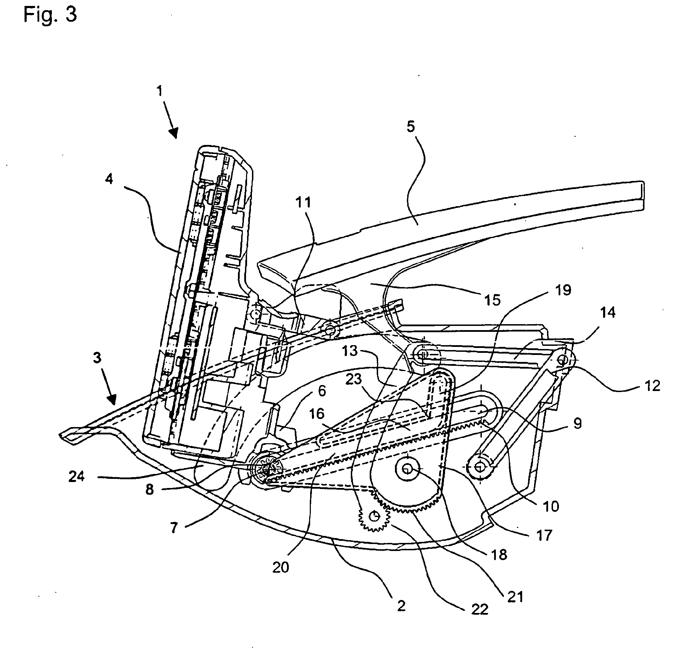

Die in der Zeichnung dargestellte, erfindungsgemäße Vorrichtung 1 weist ein kastenförmiges Gehäuse 2 mit einer Öffnung 3 auf, die sich in einer vorgesehenen Einbaulage an einer Oberseite des Gehäuses 2 befindet und mehr als die Hälfte der Oberseite des Gehäuses 2 einnimmt. Die Vorrichtung 1 ist zum Einbau in ein nicht dargestelltes Armaturenbrett eines Kraftwagens vorgesehen. Das Gehäuse 2 ist durchsichtig dargestellt, um Einbauteile sichtbar zu machen. Im Gehäuse 2 ist ein Bildschirm 4, beispielsweise ein LCD-Flachbildschirm, untergebracht, der eine Ausgabeeinheit bildet und als Multifunktionsdisplay für Fahrerinformationen vorgesehen ist. Prinzipiell kann der Bildschirm 4 auch Tasten und sonstige Bedienelemente aufweisen oder ein sog. Touch-Screen sein und dadurch eine Ein-/Ausgabeeinheit bilden. In einer in Figur 1 dargestellten geschlossenen Stellung ist der Bildschirm 4 liegend mit seiner Sichtseite nach unten gerichtet im Gehäuse 2 versenkt. Ein Deckel 5 verschließt die Öffnung 3 des Gehäuses 2. In einer in Figur 3 dargestellten geöffneten Stellung ist der Deckel 5 etwas über die Öffnung 3 angehoben und nach hinten bewegt. Der Bildschirm 4 ist nach oben aus der Öffnung 3 des Gehäuses 2 vorstehend angehoben und hat eine geringe Neigung nach hinten. Er ist für Fahrzeuginsassen, insbesondere für einen Fahrer und/oder einen Beifahrer, gut sicht- und ablesbar. Der Deckel 5 befindet sich in Blickrichtung des Fahrers und/oder Beifahrers gesehen hinter dem Bildschirm 4.

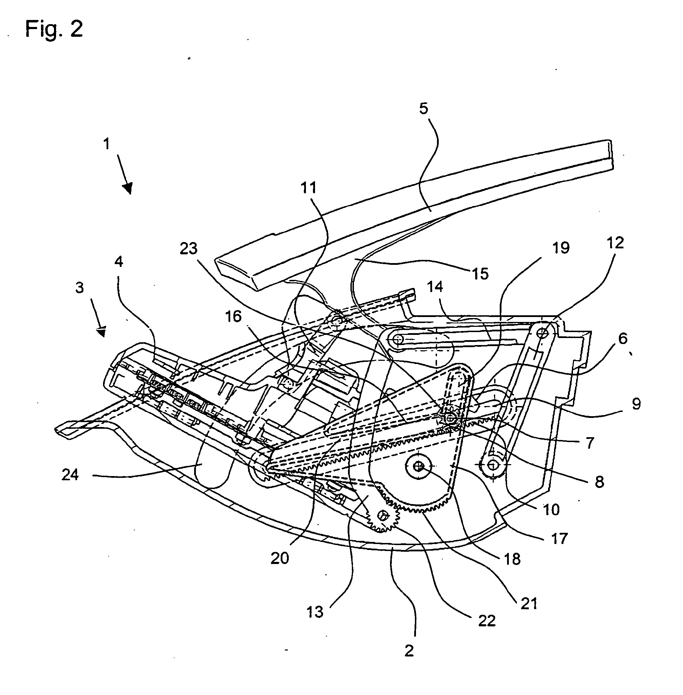

Der Bildschirm 4 weist einen Elektromotor 6 mit angeflanschtem Untersetzungsgetriebe zum Antrieb auf. Der Elektromotor 6 treibt eine Antriebswelle 7 an, die das Gehäuse 2 quer durchsetzt und mit ihr drehfeste Zahnräder 8 an beiden Enden aufweist. Die Zahnräder 8 befinden sich in Schlitzen 9 in Seitenwänden des Gehäuses 2. Jeweils ein Rand der Schlitze 9 weist eine Verzahnung auf, d. h. er bildet eine Zahnstange 10, mit der das Zahnrad 8 kämmt. Im dargestellten Ausführungsbeispiel der Erfindung sind die Schlitze 9 und die Zahnstangen 10 gerade, grundsätzlich ist auch ein nicht gerader Verlauf der Schlitze 9 und der Zahnstangen 10 möglich. Durch drehenden Antrieb der Antriebswelle 7 und der auf ihr drehfesten Zahnräder 8 mit dem Elektromotor 6 lässt sich das untere, hintere Ende des Bildschirms 4, wo der Elektromotor 6 angebracht ist, im Gehäuse 2 vor- und zurückbewegen und der Bildschirm 4 dadurch aus der in Figur 1 dargestellten, liegenden und mit der Sichtseite nach unten gerichteten Stellung über die in Figur 2 dargestellte Zwischenstellung in die in Figur 3 dargestellte, stehende, mit der Sichtseite nach vorn gerichtete, d. h. einem Fahrer und/oder Beifahrer oder allgemein einem Insassen zugewandten Stellung schwenken.

Mit vorn ist eine einem Innenraum eines Fahrzeugs, in das die Vorrichtung 1 eingebaut ist, bzw. einem Fahrzeuginsassen zugewandte Seite gemeint. Hinten meint dementsprechend eine dem Fahrzeuginnenraum bzw. einem Insassen abgewandte Seite.

In etwa mittlerer Höhe ist der Bildschirm 4 mittels einer Schwinge 11 gelenkig mit dem Gehäuse 2 verbunden. Die Schwinge 11 bildet einen Schwenkhebel, dessen eines Ende gelenkig mit dem Bildschirm 4 und dessen anderes Ende gelenkig mit den Seitenwänden des Gehäuses 2 verbunden ist.

Der Deckel 5 ist mit einem Viergelenk an jeder Seitenwand des Gehäuses 2 geführt. Die beiden Viergelenke bilden zwangsläufige, mehrgliedrige, ebene Getriebe, sie befinden sich auf Außenseiten der Seitenwände des Gehäuses 2. Jedes Viergelenk weist zwei Schwenkhebel 12, 13 auf, deren jeweils eines Ende schwenkbar an der jeweiligen Seitenwand des Gehäuses 2 gelagert ist. Die anderen Enden der Schwenkhebel 12, 13 sind mit einem dritten Hebel 14 schwenkbar verbunden, mit dem ein vom Deckel 5 starr nach unten abstehender, gekrümmter Arm 15 starr verbunden ist. Der Arm 15 des Deckels 5 durchgreift die Öffnung 3 des Gehäuses 2 und durchgreift einen kreisbogenförmigen Schlitz 24 in der Seitenwand des Gehäuses 2. Durch Vor- und Zurückschwenken der Schwenkhebel 12, 13 wird der Deckel 5 aus der in Figur 1 dargestellten, geschlossenen Stellung von der Öffnung 3 des Gehäuses 2 nach oben abgehoben und über die in Figur 2 dargestellte Stellung nach hinten bewegt. Die beiden Schwenkhebel 12, 13 stehen nicht exakt parallel zueinander, sie bilden zusammen mit dem Hebel 14 nicht exakt ein Parallelogramm. Die Bewegung des Deckels 5 ist deswegen keine ausschließliche Translationsbewegung auf einer gedachten Kreisbogenbahn, der Deckel 5 schwenkt etwas während seiner Bewegung.

Der Antrieb des Deckels 5 erfolgt mit dem Elektromotor 6, der unten an der Rückseite des Bildschirms 4 angebracht ist und diesen antreibt. Auf Außenseiten der Zahnräder 8 weist die Antriebswelle 7 Zapfen auf, die in eine Nut 16 einer Kurvenscheibe 17 eingreifen. Die Kurvenscheibe 17 bildet ein Koppelglied, das die Bewegung des Deckels 5 mit der Bewegung des Bildschirms 4 koppelt. Die Nut 16 der Kurvenscheibe 17 kann auch als Kurve oder als Kulisse bzw. Kulissenbahn und die Kurvenscheibe 17 als Kulissenscheibe bezeichnet werden. Die Kurvenscheibe 17 ist mit einem Zapfenlager 18 schwenkbar auf einer Außenseite der Seitenwände des Gehäuses 2 gelagert. Die Kurve 16 ist abgewinkelt, sie weist einen kurzen Schenkel 19 und einen langen Schenkel 20 auf, die in einem Winkel zueinander verlaufen und sich an einem Scheitel 23 treffen. Die Kurve 16 weist in jeder Schwenkstellung einen Schnittpunkt mit dem Schlitz 9 in der Seitenwand des Gehäuses 2 auf oder sie verläuft deckungsgleich mit dem Schlitz 9.

Bewegt sich die Antriebswelle 7 durch drehenden Antrieb mit dem Elektromotor 6 im Schlitz 9 von hinten nach vorn, d. h. aus der in Figur 1 dargestellten geschlossenen in die in Figur 3 dargestellte offene Stellung, bewegt sich ihr Zapfen vom Ende des kurzen Schenkels 19 der Nut 16 zum Scheitel 23 und dann entlang des langen Schenkels 20 der Nut 16. Während der Bewegung im kurzen Schenkel 19 schwenkt der Zapfen der Antriebswelle 7 die Kurvenscheibe 17 aus der in Figur 1 dargestellten Stellung in die in Figur 2 dargestellte Stellung. In der in Figur 2 dargestellten Stellung des Deckels 5 und des Bildschirms 4 befindet sich der Zapfen der Antriebswelle 7 in etwa im Scheitel 23 der abgewinkelten Nut 16. Die Kurvenscheibe 17 ist so verschwenkt, dass der lange Schenkel 20 der Nut 16 deckungsgleich mit dem Schlitz 9 in der Seitenwand des Gehäuses 2 ist. Bei der weiteren Bewegung der Antriebswelle 7 bewegt sich deren Zapfen im langen Schenkel 20 der Kurve 16. Da der lange Schenkel 20 parallel zum Schlitz 9, in dem sich die Antriebswelle 7 bewegt, verläuft, schwenkt die Kurvenscheibe 17 nicht mehr. Damit bewegt sich auch der Deckel 5 nicht mehr, der Deckel 5 erreicht seine offene Stellung also bereits in Figur 2 und bewegt sich nicht mehr, während der Bildschirm 4 erst etwas nach oben geschwenkt ist und noch in die stehende, in Figur 3 dargestellte Stellung nach oben geschwenkt wird. Der Zapfen der Antriebswelle 7 verriegelt die Kurvenscheibe 17, wenn sich der Zapfen mit Abstand vom Scheitel 23 der Nut 16 in deren langem, mit dem Schlitz 9 deckungsgleichen Schenkel 20 befindet. Im Zusammenwirken mit dem Schlitz 9 in der Seitenwand des Gehäuses 2, und der Antriebswelle 7 mit dem Zahnrad 8 und dem in die Nut 16 der Kurvenscheibe 17 eingreifenden Zapfen bildet die Kurvenscheibe 17 eine Verriegelungseinrichtung für den Deckel 5, die diesen verriegelt, wenn er seine offene, in Figuren 2 und 3 zu sehende Stellung erreicht hat.

Die Kurvenscheibe 17 weist eine kreisbogenförmige Verzahnung 21 auf, die mit einer zahnradförmigen Verzahnung 22 eines der beiden Schwenkhebel 13 kämmt. Durch den Schwenkantrieb der Kurvenscheibe 17 wird somit der eine Schwenkhebel 13 schwenkend angetrieben und insgesamt wird das als Viergelenk ausgebildete, die Schwenkhebel 12, 13 und den Hebel 14 aufweisende, den Deckel 5 führende und bewegende Getriebe angetrieben.

Die beschriebenen Bauteile, die den Bildschirm 4 und den Deckel 5 bewegen, sind auf beiden Seiten des Gehäuses 2 deckungsgleich vorhanden und bewegen sich synchron. Die Synchronisation erfolgt über die Antriebswelle 7, die das Gehäuse 2 quer durchsetzt und in jeder Seitenwand des Gehäuses 2 mit der Zahnstange 10 kämmt.

## Patentansprüche

1. Vorrichtung zur beweglichen Halterung einer Ein-/Ausgabeeinheit, mit einem Antrieb (6) zum Schwenken der Ein-/Ausgabeeinheit (4) aus einer liegenden Nichtgebrauchsstellung in eine stehende Gebrauchsstellung und umgekehrt, mit einem Deckel (5), der in einer geschlossenen Stellung die Ein-/Ausgabeeinheit (4) in der Nichtgebrauchsstellung abdeckt, und mit einem zwangsläufigen, mehrgliedrigen, ebenen Getriebe (12, 13, 14), das eine kinematische Kette und eine Führung für den Deckel (5) bildet, die den Deckel (5) aus der geschlossenen in die offene Stellung und umgekehrt bewegt, **dadurch gekennzeichnet, dass** die Vorrichtung (1) ein Koppelglied (17) aufweist, das die Bewegung der Ein-/Ausgabeeinheit (4) und die Bewegung des Deckels (5) synchronisiert, dass das Koppelglied (17) vom Antrieb (6) der Ein-/Ausgabeeinheit (4) angetrieben wird und das Getriebe (12, 13, 14) des Deckels (5) antreibt.

2. Vorrichtung nach Anspruch 1, **dadurch gekennzeichnet, dass** das Koppelglied (17) schwenkbar gelagert ist.

3. Vorrichtung nach Anspruch 1, **dadurch gekennzeichnet, dass** das Koppelglied (17) eine Kurve (16) aufweist, die beim Schwenken der Ein-/Ausgabeeinheit (4) vom Antrieb (6) abgefahren wird, der dabei das Koppelglied (17) bewegt.

4. Vorrichtung nach Anspruch 1, **dadurch gekennzeichnet, dass** das Koppelglied (17) den Deckel (5) in der offenen Stellung verriegelt.

5. Vorrichtung nach Anspruch 1, **dadurch gekennzeichnet, dass** das Koppelglied (17) eine Verzahnung (21) aufweist, die mit einer korrespondierenden Verzahnung (22) des Getriebes (12, 13, 14) des Deckels (5) kämmt.

6. Vorrichtung nach Anspruch 1, **dadurch gekennzeichnet, dass** die Vorrichtung (1) eine Antriebsbahn (9, 10) aufweist, an der sich der Antrieb (6) beim Schwenken der Ein-/Ausgabeeinheit (4) entlang bewegt.

7. Vorrichtung nach Anspruch 1, **dadurch gekennzeichnet, dass** das Getriebe (12, 13, 14) des Deckels (5) ein Viergelenk aufweist.

8. Vorrichtung nach Anspruch 1, **dadurch gekennzeichnet, dass** der Deckel (5) seine offene Stellung erreicht, bevor die Ein-/Ausgabeeinheit (4) ihre Gebrauchsstellung erreicht.

## Claims

1. Device for movable support of an input/output unit, having a drive (6) for pivoting the input/output unit (4) from a lying non-use position into an upright position of use and vice versa, having a cover (5), which in a closed position covers the input/output unit (4) in the non-use position, and having a positive, multi-link, planar gear mechanism (12, 13, 14), which forms a kinematic chain and a guide for the cover (5), which moves the cover (5) out of the closed into the open position and vice versa, **characterised in that** the device (1) comprises a coupling element (17), which synchronises the movement of the input/output unit (4) and the movement of the cover (5), **in that** the coupling element (17) is driven by the drive (6) of the input/output unit (4) and drives the gear mechanism (12, 13, 14) of the cover (5).

2. Device according to claim 1, **characterised in that** the coupling element (17) is pivotally mounted.

3. Device according to claim 1, **characterised in that** the coupling element (17) comprises a curve (16), which is followed by the drive (6) upon pivoting of the input/output unit (4), the drive in the process moving the coupling element (17).

4. Device according to claim 1, **characterised in that** the coupling element (17) locks the cover (5) in the open position.

5. Device according to claim 1, **characterised in that** the coupling element (17) comprises a toothing (21), which meshes with a corresponding toothing (22) of the gear mechanism (12, 13, 14) of the cover (5).

6. Device according to claim 1, **characterised in that** the device (1) comprises a drive track (9, 10), along which the drive (6) moves during pivoting of the input/output unit (4).

7. Device according to claim 1, **characterised in that** the gear mechanism (12, 13, 14) of the cover (5) comprises a four-bar linkage.

8. Device according to claim 1, **characterised in that** the cover (5) reaches its open position before the input/output unit (4) reaches its position of use.

## Revendications

1. Dispositif de support mobile d'une unité d'entrée/sortie, comprenant un entraînement (6) conçu pour faire pivoter ladite unité (4) d'entrée/sortie d'une position horizontale de non-utilisation à une position verticale d'utilisation, et inversement ; un couvercle (5) recouvrant, dans une position fermée, ladite unité (4) d'entrée/sortie occupant la position de non-utilisation ; et une transmission (12, 13, 14) à marche forcée, plane et composée de plusieurs éléments, qui forme une chaîne cinématique et un guide affecté au couvercle (5) et imprimant des mouvements audit couvercle (5) de la position fermée à la position ouverte, et inversement, **caractérisé par le fait que** ledit dispositif (1) présente un organe de couplage (17) qui synchronise le mouvement de l'unité (4) d'entrée/sortie et le mouvement du couvercle (5) ; et **par le fait que** ledit organe de couplage (17) est mené par l'entraînement (6) de l'unité (4) d'entrée/sortie, et mène la transmission (12, 13, 14) du couvercle (5).

2. Dispositif selon la revendication 1, **caractérisé par le fait que** l'organe de couplage (17) est monté à pivotement.

3. Dispositif selon la revendication 1, **caractérisé par le fait que** l'organe de couplage (17) comporte une came (16) sur laquelle l'entraînement (6) se déplace lors du pivotement de l'unité (4) d'entrée/sortie, et qui imprime alors des mouvements audit organe de couplage (17).

4. Dispositif selon la revendication 1, **caractérisé par le fait que** l'organe de couplage (17) verrouille le couvercle (5) dans la position ouverte.

5. Dispositif selon la revendication 1, **caractérisé par le fait que** l'organe de couplage (17) possède une denture (21) engrenant dans une denture complémentaire (22) de la transmission (12, 13, 14) du couvercle (5).

6. Dispositif selon la revendication 1, **caractérisé par le fait que** ledit dispositif (1) présente une piste d'entraînement (9, 10) le long de laquelle l'entraînement (6) se meut lors du pivotement de l'unité (4) d'entrée/sortie.

7. Dispositif selon la revendication 1, **caractérisé par le fait que** la transmission (12, 13, 14) du couvercle (5) offre une articulation quadruple.

8. Dispositif selon la revendication 1, **caractérisé par le fait que** le couvercle (5) atteint sa position ouverte avant que l'unité (4) d'entrée/sortie n'atteigne sa position d'utilisation.
